# EUROPEAN PATENT APPLICATION

(11) **EP 4 233 554 A1**
(43) Date of publication of application: **30.08.2023**
(21) Application number: 22158730.6
(22) Date of filing: 25.02.2022
(51) Int. Cl.: A23K 40/30, A23K 50/80, A23P 20/10, A23P 30/20

(54) **COATED FISH FEED COMPOSITIONS**

(71) Applicant: Can Technologies, Inc., Hopkins, Minnesota 55343 (US)
(72) Inventor: Gitlesen, Thomas, 4335 Dirdal (NO); Mrkaljevic, Dzana, 4330 Ålgård (NO)
(74) Representative: Jantschy, Jasmin

(57) **Abstract**

The present disclosure generally relates to a fish feed comprising an extruded, pressed, or particulate fish feed pellet and a coating composition surrounding the feed pellet and comprising an oil and a solid particle with a median particle size between 5 µm and 600 µm. In general, the coating composition will include a solid particle selected from the group consisting of wheat gluten, soy protein concentrate, pea protein concentrate, fish meal, concentrated fish soluble protein, feather meal, bentonite, diatomaceous earth, zyolate, ammonium phosphate, dicalcium phosphate, monocalcium phosphate, algae oil, and combinations thereof.

## Description

### CROSS REFERENCE TO RELATED APPLICATIONS

Not applicable

### FIELD OF THE INVENTION

The invention relates to fish feed, methods for decreasing nutrient leakage from said fish feed, and methods for methods for preparing a coated fish feed.

### BACKGROUND OF THE INVENTION

Water-borne feeding systems for commercial fish farms are gaining use and popularity in the industry due to their ease of use, for example with the growth of recirculating aquaculture systems. Recirculating aquaculture systems (RAS) have grown in prevalence for land-based rearing of fish. For example, RAS may be used to produce salmon smolt as well as grow salmon to market size. RAS operates by filtering the water extracted from the fish tanks prior to recirculation in the tank or release into the environment. Both fresh water, brackish and saltwater RAS are known and used in the art. The RAS technology provides many benefits over traditional fish farming methods, including reduced regulatory burdens, reduced shipping costs by locating the fish production close to markets, minimizing environmental risks related to storms, algae blooms, and natural threats, and increasing control over the culture environment to mimic the biology of the cultured species from optimal performance.

However, standard fish feeds and fish feed products are not amenable to use in water-borne feeding systems and are prone to nutrient leakage, wherein nutrients from the fish feed leak into the water of the water-borne feeding system prior to delivery to the fish. Therefore, a need in the art exists for additional compositions and methods to control and help reduce nutrient leakage from feed used in water-borne feeding systems.

### SUMMARY OF THE INVENTION

Provided herein is a fish feed comprising a) an extruded, pressed, or particulate fish feed pellet; and b) a coating composition surrounding the feed pellet and comprising an oil and a solid particle with a median particle size between 5 µm and 600 µm. The oil may be selected from the group consisting of vegetable oil, canola oil, poultry oil, rapeseed oil, fish oil, soy oil, linseed oil, camelina oil, fish oil stearine, coconut oil, hydrogenated rapeseed oil, and combinations thereof. The coating composition may comprise at least two oils selected from the group consisting of vegetable oil, canola oil, poultry oil, rapeseed oil, fish oil, soy oil, linseed oil, camelina oil, fish oil stearine, coconut oil, and hydrogenated rapeseed oil. The coating composition may comprise a solid particle selected from the group consisting of wheat gluten, soy protein concentrate, pea protein concentrate, fish meal, concentrated fish soluble protein, feather meal, bentonite, diatomaceous earth, zyolate, ammonium phosphate, dicalcium phosphate, monocalcium phosphate, and combinations thereof. Preferably, the coating composition comprises wheat gluten. The coating composition may comprise between 0.01% and 15%, between 0.05% and 10%, between 0.1% and 8%, between 0.01% and 2%, or between 2% and 8% by weight of the solid particle(s). Nutrient leakage from the fish feed composition is reduced relative to a fish feed composition lacking the coating composition. Nutrient leakage may be reduced at least 10%, at least 20%, at least 30%, at least 40%, or at least 50% relative to an equivalent fish feed lacking the coating composition.

The fish feed pellet may comprise between about 15% and about 65% protein and between about 10% and about 45% fat. The fish feed pellet may comprise land-animal protein, fishmeal, plant-based protein, or combinations thereof.

Also provided is a method for preparing a fish feed composition, the method comprising applying a coating composition to the surface of an extruded, pressed, or particulate fish feed pellet, wherein the coating composition comprises an oil and a solid particle with a median particle size between 5 µm and 600 µm. The method may include applying a first coating composition comprising an oil to the surface of an extruded, pressed, or particulate fish feed pellet; and applying a second coating composition comprising an oil to the surface the coated fish feed pellet, wherein the first coating composition, the second coating composition, or both comprise between 0.01% and 15% by weight of solid particles with a median particle size between 5 µm and 600 µm. The coating composition used in the methods may be a slurry prepared by a method comprising: i) providing the oil; and ii) adding the solid particle(s) to the oil to form the coating composition slurry.

Also provided in the use of a coating composition comprising an oil and between 0.01% and 15% by weight of solid particles with a median particle size between 5 µm and 600 µm on the surface of an extruded, pressed, or particulate fish feed pellet to prevent nutrient leakage thereof, wherein use of the coating composition reduced nutrient leakage from the fish feed pellet by at least 10%, at least 20%, at least 30%, at least 40%, or at least 50% relative to an equivalent fish feed lacking the coating composition.

### BRIEF DESCRIPTION OF THE DRAWINGS

The patent or patent application file contains at least one drawing in color. Copies of this patent or patent application publication with color drawings will be provided by the Office upon request and payment of the necessary fee.
FIG. 1 shows the particle size distribution of algae oil used in Examples 1 and 2.

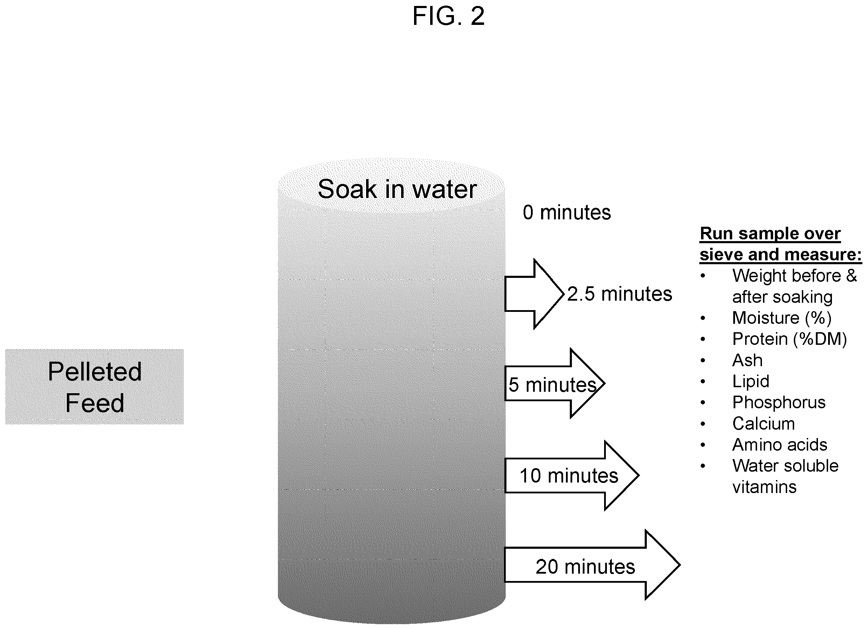

FIG. 2 shows a schematic of the in vitro leakage assay of Method 1.

### DETAILED DESCRIPTION OF THE INVENTION

Reference will now be made in detail to certain embodiments of the disclosed subject matter. While the disclosed subject matter will be described in conjunction with the enumerated claims, it will be understood that the exemplified subject matter is not intended to limit the claims to the disclosed subject matter.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in any order without departing from the principles of the invention, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. The term "substantially free of' as used herein can mean having none or having a trivial amount of, such that the amount of material present does not affect the material properties of the composition including the material, such that about 0 wt% to about 5 wt% of the composition is the material, or about 0 wt% to about 1 wt%, or about 5 wt% or less, or less than or equal to about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

Various aspects of the present disclosure provide a feed composition including a coating composition. The feed composition is a fish feed, or a feed product for forming the fish feed. The feed product can be designed to be mixed with another composition, such as a base fish feed, or form the fish feed. The fish feed can be formulated for use in any suitable life stage of the fish, such as for use with fry, juvenile, smolt, adult, and/or spawning fish.

The fish may be a carnivorous fish. As used herein "carnivorous" refers to a fish family or species whose food, energy, and nutrient requirements, when in their native, wild habitat, may be derived solely from animal tissue or meat. In a fish farm, carnivorous fish may be fed vegetable based or omnivorous diets, however the term carnivorous applies to the fish's natural state in the wild. Carnivorous fish include, but are not limited to, salmonids, tunas and mackerels, eels, flatfish, amberjacks, striped bass sea bass and other bass, sea bream and other breams, codfish, barramundi, pompano, lumpfish, wrasse, wolf fish and the like.

As used herein, "salmonids" refers to a fish of the family Salmonidae. Salmonids include, but are not limited to, salmon, trout, char, freshwater whitefish, and graylings. The salmonid may be, but is not limited to, an Atlantic salmon (*Salmo salar*), a species of salmon native to the Pacific Ocean (*Oncorhynchus* sp.), Rainbow trout (*Oncorhynchus mykiss*), Coho salmon (*Oncorhynchus kisutch*), and the like.

As used herein, "coating composition," refers to an oil-based composition used to coat or surround a fish feed or a fish feed product. In general, the coating composition will include one or more oils and a solid particle(s). Preferably the coating composition will cover the entire surface of the fish feed or fish feed product and will form at least two layers surrounding the fish feed or fish feed product. The coating composition may be in the form of a slurry. The coating composition slurry may be made by adding the solid particle(s) to a volume of oil to form the coating composition slurry. The coating composition slurry may then be used to coat the fish feed or fish feed product in at least two, at least three, at least four, or more layers.

The coating composition may be applied to the fish feed by infusion, for example, vacuum infusion. Methods for infusion, including vacuum infusion, are known and described in the art.

The oil in the coating composition may be any suitable oil know in the art, including but not limited to vegetable oil, canola oil, poultry oil, rapeseed oil, fish oil, soy oil, linseed oil, camelina oil, fish oil stearine, coconut oil, hydrogenated rapeseed oil, and combinations thereof. The oil in the coating composition may be the same oil, or the same combination of oils, that is used in the fish feed or fish feed product around which the coating composition is applied. Alternatively, and preferably, the oil in the coating composition may be a different oil, or different combination of oils, than the oil(s) used in the fish feed or fish feed product around which the coating compoistion is applied. The oil in the coating composition may be a combination of at least two, at least three, at least four, or at least five oils. For example, the oil in the coating composition may inlcude a combination of rape seed oil with one or more of fish oil, fish oil stearine, coconut oil, and hydrogenated rape seed oil.

The solid particle(s) in the coating composition will have a particle size of at least 5 µm, at least 10 µm, at least 20 µm, at least 30 µm, at least 40 µm, or at least 50 µm, for example, between 5 µm and 600 µm, between 20 µm and 550 µm, between 30 µm and 500 µm, or, preferably, between 40 µm and 400 µm. Suitable sources of the solid particles include, but are not limited to, wheat gluten, soy protein concentrate, pea protein concentrate, fish meal, concentrated fish soluble protein, feather meal, bentonite, diatomaceous earth, zyolate, ammonium phosphate, dicalcium phosphate, monocalcium phosphate, algae oil, and combinations thereof.
The solid particle(s) can form any suitable portion of the coating composition. For example, the solid particle(s) can be 0.01 wt% to 15 wt% of the coating composition, e.g., 0.05% to 10%, 0.1% to 8%, 0.01% to 2%, or 2% to 8% by weight of the coating composition is the solid particle(s).

The fish feed can be a complete fish feed. A complete fish feed is a nutritionally adequate feed for fish that is compounded to be fed as the sole ration and can maintain life and/or promote growth and production without any additional substances being consumed except water. Complete feeds are compounded mixtures containing all the nutrients of concentrates plus various energy sources such as grains (starch), some fat, and the like. In addition, certain major vitamins and minerals may be added. A complete feed can include ingredients such as, but not limited to, fishmeal, poultry meal, plant meal, vegetable meal, corn meal, corn gluten meal, soy meal, soy protein concentrate, single cell protein, insect meal, algae meal, algae oil, krill meal, krill oil meat meal, blood meal, feather meal, starches, tapioca starch, wheat, wheat gluten, guar meal, guar protein concentrate peas, pea protein concentrate, pea starch, beans, faba beans, sunflower meal, vegetable oil, canola oil, poultry oil, rapeseed oil, fish oil, soy oil, linseed oil, camelina oil, lecithin, macro-minerals, minerals, vitamins, amino acids, pigment, astaxanthin, canthaxanthin and combinations thereof. One skilled in the art would appreciate that either a meal or a protein concentrate may be used in a feed formulation.

The total protein in the fish feed may be between 10 wt % and 70 wt%, between 15 wt% and 65 wt%, between 20 wt% and 60 wt %, or between 25 wt% and about 55 wt%. The total protein in the fish feed may be at least 10%, 15%, 20%, 25%, 30%, 35%, 38%, 40%, 42%, 44%, 46%, 48%, 50%, 52%, 55%, 60%, 65%, or at least 70% by weight. The total protein in the fish feed may be variable depending on the formulation, species, and intended use of the feed. One of skill in the art will recognize the various protein requirements of fish receiving the fish feed and can adjust the protein content accordingly.

The protein in the fish feed may be from any suitable source including, but not limited to, fishmeal, land-animal protein (e.g., poultry meal), plant-based protein (e.g., vegetable meal), or combinations thereof. The fish feed may include between 0% and 80%, between 10% and 80%, between 20% and 75%, between 30% and 70%, between 60% and 80%, or between 10% and 30%, or at least 10%, 20%, 30%, 40%, 50%, 60%, 70%, or 75% fishmeal. The fish feed may include between 0% and 80%, 10% and 80%, between 20% and 75%, between 30% and 70%, between 60% and 80%, or between 10% and 30%, or at least 10%, 20%, 30%, 40%, 50%, 60%, 70%, or 75% land-animal protein. The fish feed may include between 0% and 80%, between 10% and 80%, between 20% and 75%, between 30% and 70%, between 60% and 80%, or between 10% and 30%, or at least 10%, 20%, 30%, 40%, 50%, 60%, 70%, or 75% plant-based protein. Additionally, the fish feed may be free of any one or more fishmeal, land-animal protein, or plant-based protein.

Total fat (e.g., oil, fat, and/or lipids) in the fish feed may be between 5% and 50%, between 10% and 45%, between 15% and 40%, or between 20% and 35%. The total fat in the fish feed may be at least 5%, 10%, 15%, 20%, 25%, 30%, 35%, 40%, 45%, or at least 50%. The total fat in the fish feed may be variable depending on the formulation, species, and intended use of the fish feed. One of skill in the art will recognize the various fat requirements of fish receiving the fish feed and can adjust the fat content accordingly.

The fat in the fish feed may be from any suitable source, including, but not limited to, canola oil, poultry oil, rapeseed oil, fish oil, soy oil, linseed oil, camelina oil, palm oil, lecithin and combinations thereof.

The fish feed may additionally include astaxanthin. The fish feed may include between 0.01 and 100 mg astaxanthin/kg diet. The fish feed may include at least 0.01 mg, 0.1 mg, 0.2 mg, 0.5 mg, 1 mg, 5mg, 10mg, 20 mg, 30 mg, 40 mg, 50 mg, 60 mg, 70 mg, 80mg, 90 mg, or at least 100 mg astaxanthin per kg diet. In some aspects, canthaxanthin may be used as an alternative to astaxanthin in similar concentration in the fish feed.

The moisture content of the fish feed may vary depending on the contents and preparation method of the feed. In general, the moisture content may be between 1% and 20%, between 2% and 18%, between 5% and 15%, or between 6% and 12%.

The fish feed may be a feed suitable for fish in any life stage and raised in water of any salinity. One skilled in the art would understand the requirements for fish at various life stages in water of varying salinity.

The fish feed may be an extruded, pressed, or particulate fish feed. The fish feed may be of any size appropriate for the fish being feed. For example, a fish feed for a small fish (e.g., less than 100g) may have an average size between about 0.2 mm and about 4.5 mm in length and diameter (e.g., an average size of 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, or 4.5 mm). A fish feed for a large fish (e.g., more than about 100g) may have an average size between about 4.5 mm and about 12 mm in length and diameter (e.g., an average 4.5, 4.6, 4.7, 4.8, 4.9, 5.0, 5.1, 5.2, 5.3, 5.4, 5.5, 5.6, 5.7, 5.8, 5.9, 5.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, or 12.0 mm). In general, a fish may be fed and consume fish feed for a particular size or smaller. For example, as demonstrated in the table below, a 1 g fish may be fed a 1.3 mm pellet or any smaller size pellet. A fish may be fed a feed that is at most 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 5.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, or 10.0 mm in length and diameter. One of skill in the art will recognize the various size requirements of fish receiving the fish feed and can adjust the feed size accordingly.

**Table 1: Exemplary pellet sizes and fish size recommendations**

| Atlantic Salmon fish size from (g) | Rainbow Trout fish size from (g) | Pellet mm |
|---|---|---|
| 0.15 (first feeding) | 0.15 (first feeding) | 0.6 |
| 0.4 | 0.4 | 0.9 |
| 1 | 1 | 1.3 |
| 5 | 5 | 1.7 |
| 15 | 15 | 2.2 |
| 40 | 40 | 3 |
| 80 | 80 | 4 |
| 200 | 250 | 4.9 |
| 500 | 600 | 7 |
| 1000 | 1500 | 9 |

| | | |
|---|---|---|
| All sizes have the same length/diameter | | |

The feed compositions described herein including a coated fish feed are characterized by a reduction in nutrient leakage therefrom. Typical fish feeds are not suitable for use in water borne feed delivery systems due to their susceptibility to nutrient leakage. With the rapid increase in the use of water-borne feed delivery systems, for example with recirculating aquaculture systems (RAS), there is a growing need for fish feed compositions with reduced nutrient leakage. The coated fish feed composition described herein may have a nutrient leakage that is at least 5%, at least 10%, at least 15%, at least 20%, at least 25%, at least 30%, at least 40%, at least 50%, or at least 60% less than the nutrient leakage from the uncoated fish feed or fish feed product.

As used herein, "water-borne feeding system," refers to a delivery system that transports a feed in water to the fish/animal to be fed. Water-borne feeding systems are in contrast to air-delivery systems that deliver the feed by blowing/pneumatic transport.

As used herein, "nutrient leakage" refers to the loss of fat, protein, carbohydrates, vitamins, and/or minerals from a feed. Nutrient leakage may be calculated as the loss of an individual nutrient or a combination of nutrients. For example, nutrient leakage may be measured using the *in vitro* leaching assay described as Method 1 of Example 1.

Various aspects of the present disclosure provide methods for feeding a fish. The method includes feeding a fish a coated fish feed as described herein. The method provides certain advantages to fish farming or fish rearing as compared to a corresponding method using a fish feed that does not include the coating composition. The coated fish feed may be fed to the fish using a water-borne feeding system.

The method may include any suitable method for feeding a fish fed to a fish and may be used any fish farming or rearing system. The method may include feeding a fish in a recirculating aquaculture system, flow through system, partial water reuse system, in an open net pen farming system, semi closed pen system, closed pen system. The fish farming or rearing system may be a system of any salinity suitable for the fish being raise, for example, a freshwater, a brackish, or a saltwater system.

The method may include feeding fish at any life stage. For example, the method of feeding may include feeding fry, juvenile, smolt, adult, and/or spawning fish. The fish may also be fed the fish feed including the binding agent for any period of time and across life stages. For example, smolt fish may be fed the fish feed including the binding agent and the same fish may continue to receive a feed including the binding agent upon reaching and throughout adulthood.

### EXAMPLES

### Example 1

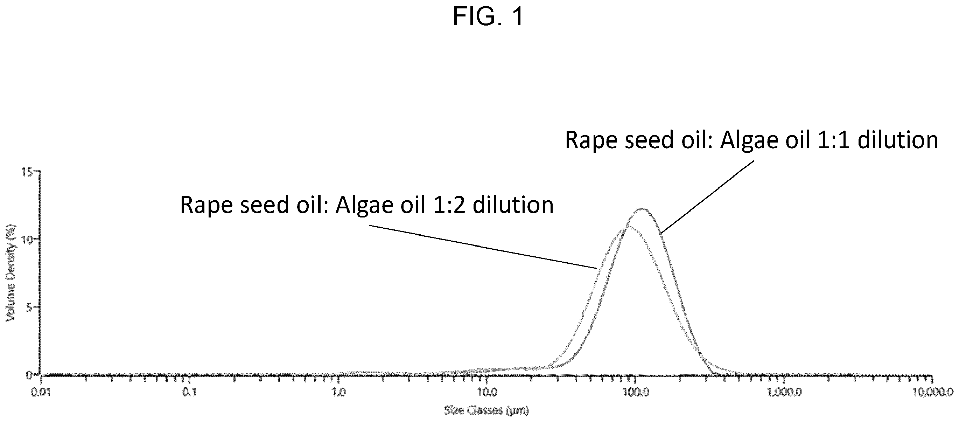

Coated feed compositions were prepared by creating a slurry of the ingredients outlined in Table 2. Particle size distribution of the algae oil is shown in FIG. 1. The prepared slurries were used to coat extruded fish feed pellets by vacuum infusion. 9mm fish feed pellets used in this study contained 36-40% protein, 34-37% fat, 5-8% water, approximately 4% fiber, 3-10% ash, and approximately 22.5 MH/kg digestible energy.

**Table 2: Coating Compositions**

| Coating Sample | Ingredients (wt%) | | | | | | Nutrient Leakage (% dry matter loss) | |
|---|---|---|---|---|---|---|---|---|
| | Rape Seed Oil | Fish Oil | Fish Oil Stearine | Coconut Oil | Hydrogenated Rape Seed Oil | Algae Oil | Mean | Standard Deviation |
| 1.1 | 56 | 43 | 0 | 0 | 1 | 0 | 7.5047 | 2.6048 |
| 1.2 | 56 | 34 | 9 | 0 | 1 | 0 | 8.1047 | 6.0831 |
| 1.3 | 50 | 43 | 0 | 6 | 1 | 0 | 8.1340 | 5.7321 |
| 1.4 | 50 | 34 | 9 | 6 | 1 | 0 | 7.1619 | 4.5308 |
| 1.5 | 50 | 34 | 9 | 0 | 1 | 6 | 4.2495 | 1.5620 |
| 1.6 | 52.1 | 34 | 9 | 0 | 1 | 3.9 | 5.6897 | 0.6637 |

### Method 1: In vitro leaching assay

An *in vitro* leaching assay was used to determine nutrient leakage from the coated pellets. The coated pellets were soaked in water for 0, 2.5, 5, 10, and 20 minutes. The after soaking samples were poured over a sieve to remove water and dissolved materials before further analysis. Data collected for the samples include weight before and after soaking, moisture percentage, protein content (% DM), ash content, lipid content, phosphorus content, calcium content, amino acid content, and water-soluble vitamin content. Nutrient leakage was calculated as loss of dry matter.

As outline in Table 2, the coating compositions containing the algae oil solid particles (Coating Samples 1.5 and 1.6) demonstrated reduced nutrient leakage in the coated feed relative to the coating compositions that only included the oil mixture.

### Example 2

Coated feed compositions were prepared by creating a slurry of the ingredients outlined in Table 3. The oil mixture for all samples contained 56% rape seed oil, 43% fish oil, and 1% hydrogenated rape seed oil. The prepared slurries were used to coat extruded fish feed pellets by vacuum infusion. 9mm fish feed pellets used in this study contained 36-40% protein, 34-37% fat, 5-8% water, approximately 4% fiber, 3-10% ash, and approximately 22.5 MH/kg digestible energy.

**Table 3: Coating Compositions**

| Coating Sample | Solid Particle Source | Oil Mixture (wt%) | Particle Inclusion (wt%) | Nutrient Leakage (% dry matter loss) |
|---|---|---|---|---|
| 2.1 | Reference | 100 | 0 | 3.0 |
| 2.2 | Wheat gluten | 99.4 | 0.6 | 1.36 |
| 2.3 | Soy protein concentrate | 99.4 | 0.6 | 2.2 |
| 2.4 | Fish meal | 99.4 | 0.6 | 2.1 |
| 2.5 | Concentrated fish soluble protein | 99.4 | 0.6 | 1.6 |
| 2.6 | Ammonium phosphate, Dicalcium phosphate, Monocalcium phosphate | 99.4 | 0.6 | 1.47 |
| 2.7 | Algae oil | 95.2 | 4.8 | 1.5 |
| 2.8 | Bentonite | 99.4 | 0.6 | 1.8 |
| 2.9 | Diatomerous earth | 99.4 | 0.6 | 1.5 |
| 2.10 | Zyolate | 99.4 | 0.6 | 1.9 |

As outlined in Table 3, coating compositions made with solid particles from a variety of sources were effective in reducing nutrient leakage in the coated feed relative to the coating with oil mix alone.

### Example 3

Coated feed compositions were prepared by creating a slurry of the ingredients outlined in Table 4. The oil mixture for all samples contained 56% rape seed oil, 43% fish oil, and 1% hydrogenated rape seed oil. The various median particle size wheat glutens were prepared by passing raw wheat gluten through a series of sieves to obtain particles of the desired size. The prepared slurries were used to coat extruded fish feed pellets by vacuum infusion. 9mm fish feed pellets used in this study contained 36-40% protein, 34-37% fat, 5-8% water, approximately 4% fiber, 3-10% ash, and approximately 22.5 MH/kg digestible energy.

**Table 4: Coating Compositions**

| Coating Sample | Wheat gluten median particle size (µm) | Oil Mixture (wt%) | Particle Inclusion | Nutrient Leakage |
|---|---|---|---|---|
| 3.1 | -- | 100 | 0 | 2.9 |
| 3.2 | 56 | 99.2 | 0.8 | 1.7 |
| 3.3 | 121 | 99.2 | 0.8 | 1.5 |
| 3.4 | 345 | 99.2 | 0.8 | 1.5 |
| 3.5 | 390 | 99.2 | 0.8 | 1.6 |

As outlined in Table 4, coating composition across all particles sizes tested were effective in reducing nutrient leakage in the coated feed relative to the coating with the oil mixture alone.

## Claims

1. A fish feed comprising
a) an extruded, pressed, or particulate fish feed pellet; and
b) a coating composition surrounding the feed pellet and comprising an oil and a solid particle with a median particle size between 5 µm and 600 µm.

2. The fish feed composition of claim 1, wherein the oil is selected from the group consisting of vegetable oil, canola oil, poultry oil, rapeseed oil, fish oil, soy oil, linseed oil, camelina oil, fish oil stearine, coconut oil, hydrogenated rapeseed oil, and combinations thereof.

3. The fish feed composition of claim 1 or claim 2, wherein the coating composition comprises at least two oils selected from the group consisting of vegetable oil, canola oil, poultry oil, rapeseed oil, fish oil, soy oil, linseed oil, camelina oil, fish oil stearine, coconut oil, and hydrogenated rapeseed oil.

4. The fish feed composition of any one of claims 1-3, wherein the coating composition comprises a solid particle selected from the group consisting of wheat gluten, soy protein concentrate, pea protein concentrate, fish meal, concentrated fish soluble protein, feather meal, bentonite, diatomaceous earth, zyolate, ammonium phosphate, dicalcium phosphate, monocalcium phosphate, and combinations thereof.

5. The fish feed composition of any one of claims 1-4, wherein the coating composition comprises wheat gluten.

6. The fish feed composition of any one of claims 1-5, wherein the fish feed pellet comprises between about 15% and about 65% protein and between about 10% and about 45% fat; and wherein the fish feed pellet comprises land-animal protein, fishmeal, plant-based protein, or combinations thereof.

7. The fish feed composition of any one of claims 1-6, wherein the coating composition comprises between 0.01% and 15%, between 0.05% and 10%, between 0.1% and 8%, between 0.01% and 2%, or between 2% and 8% by weight of the solid particle(s).

8. The fish feed composition of any one of claims 1-7, wherein nutrient leakage from the fish feed composition is reduced relative to a fish feed composition lacking the coating composition.

9. The fish feed composition of claim 8, wherein nutrient leakage is reduced at least 10%, at least 20%, at least 30%, at least 40%, or at least 50% relative to an equivalent fish feed lacking the coating composition.

10. A method of preparing a fish feed composition, the method comprising
applying a coating composition to the surface of an extruded, pressed, or particulate fish feed pellet, wherein the coating composition comprises an oil and a solid particle with a median particle size between 5 µm and 600 µm.

11. The method of claim 10, comprising
applying a first coating composition comprising an oil to the surface of an extruded, pressed, or particulate fish feed pellet; and
applying a second coating composition comprising an oil to the surface the coated fish feed pellet,
wherein the first coating composition, the second coating composition, or both comprise between 0.01% and 15% by weight of solid particles with a median particle size between 5 µm and 600 µm

12. The method of claim 10 or claim 11, wherein the coating composition comprises at least two oils selected from the group consisting of vegetable oil, canola oil, poultry oil, rapeseed oil, fish oil, soy oil, linseed oil, camelina oil, fish oil stearine, coconut oil, and hydrogenated rapeseed oil.

13. The method of any one of claims 10-12, wherein the coating composition comprises a solid particle selected from the group consisting of wheat gluten, soy protein concentrate, pea protein concentrate, fish meal, concentrated fish soluble protein, feather meal, bentonite, diatomaceous earth, zyolate, ammonium phosphate, dicalcium phosphate, monocalcium phosphate, algae oil, and combinations thereof.

14. The method of any one of claims 10-13, wherein the coating composition comprises wheat gluten.

15. The method of any one of claims 10-14, wherein the coating composition is a slurry prepared by a method comprising:
i) providing the oil; and
ii) adding the solid particle(s) to the oil to form the coating composition slurry.

16. Use of a coating composition comprising an oil and between 0.01% and 15% by weight of solid particles with a median particle size between 5 µm and 600 µm on the surface of an extruded, pressed, or particulate fish feed pellet to prevent nutrient leakage thereof, wherein use of the coating composition reduced nutrient leakage from the fish feed pellet by at least 10%, at least 20%, at least 30%, at least 40%, or at least 50% relative to an equivalent fish feed lacking the coating composition.
